# EUROPÄISCHE PATENTSCHRIFT

(11) **EP 3 350 615 B1**
(45) Veröffentlichungstag und Bekanntmachung des Hinweises auf die Patenterteilung: **11.09.2019**
(21) Anmeldenummer: 16742316.9
(22) Anmeldetag: 26.07.2016
(51) Int. Cl.: G01S 7/481, G01S 17/42, G01S 17/93, G02B 27/09

(54) **LIDARSENSOR**
LIDAR SENSOR
CAPTEUR LIDAR

(30) Priorität: 18.09.2015 DE 102015217908
(43) Veröffentlichungstag der Anmeldung: 25.07.2018
(73) Patentinhaber: Robert Bosch GmbH, 70442 Stuttgart (DE)
(72) Erfinder: STOPPEL, Klaus, 74395 Mundelsheim (DE); BUETTNER, Axel, 70197 Stuttgart (DE); SCHNITZER, Reiner, 72762 Reutlingen (DE); SCHWARZ, Hans-Jochen, 70567 Stuttgart (DE)
(86) Internationale Anmeldenummer: PCT/EP2016/067734
(87) Internationale Veröffentlichungsnummer: WO 2017/045816

(56) Entgegenhaltungen:
- EP-A2- 2 110 699
- DE-A1-102011 007 243

## Beschreibung

Die Erfindung betrifft einen Lidarsensor, insbesondere für Kraftfahrzeuge, mit einer Lichtquelle, einem beweglichen Ablenkspiegel zum Erzeugen eines einen Überwachungsraum überstreichenden Taststrahls durch Ablenken eines von der Lichtquelle emittierten Lichtstrahls, und mit einem optischen Empfänger zum detektieren von Licht, das an einem von dem Taststrahl getroffenen Objekt im Überwachungsraum reflektiert wurde.

### Stand der Technik

Lidarsensoren werden unter anderem in Fahrerassistenzsystemen für Kraftfahrzeuge zur Erfassung des Verkehrsumfelds eingesetzt, beispielsweise zur Ortung von vorausfahrenden Fahrzeugen oder anderen Hindernissen.

Bei herkömmlichen Lidarsensoren der oben genannten Art wird der von der Lichtquelle, beispielsweise einem Halbleiterlaser, erzeugte Lichtstrahl durch eine Optik geringfügig aufgeweitet, so dass er einen Strahldurchmesser von beispielsweise 1-2 mm hat. Dieser Strahl wird dann am Ablenkspiegel abgelegt und bildet unmittelbar den Taststrahl zur Ortung von Objekten. Der Ablenkspiegel wird oszillierend in einer Dimension oder in zwei Dimensionen bewegt, so dass der Taststrahl einen bestimmten Winkelbereich oder - im Fall einer zweidimensionalen Bewegung des Ablenkspiegels - einen bestimmten Raumwinkelbereich überstreicht, der den Überwachungsraum bildet.

Aufgrund des kleinen Strahldurchmessers kann ein kleinbauender Ablenkspiegel verwendet werden, der ein entsprechend kleines Trägheitsmoment hat, so dass die Mechanik des Spiegels auch bei hohen Oszillationsfrequenzen nicht überbeansprucht wird und somit eine Abtastung des Überwachungsraumes mit hoher Framerate möglich ist.

Nachteilig ist jedoch, dass bei Staub, Regen oder Schnee verhältnismäßig hohe Absorptions- und Streuverluste auftreten, weil der Strahldurchmesser im Verhältnis zu den streuenden Partikeln (z. B. Schneeflocken) relativ klein ist. Unter ungünstigen Bedingungen wird dadurch die Reichweite und Empfindlichkeit des Lidarsensors begrenzt. Durch das Erfordernis der Augensicherheit wird außerdem die maximal zulässige Intensität des Laserstrahls begrenzt. Auch daraus ergeben sich Beschränkungen hinsichtlich Reichweite und Empfindlichkeit.

Als Alternative sind sogenannte Makroscanner bekannt, bei denen der Laserstrahl durch die Optik wesentlich stärker aufgeweitet wird. Aufgrund der Erhaltung des Strahlparameterprodukts kann dann im Fernfeld ein sehr kleiner Öffnungswinkel des Taststrahls erreicht werden. Zum Ablenken des Strahls würde allerdings ein sehr groß dimensionierter Ablenkspiegel benötigt. Aus diesem Grund wird zumeist der Lidarsensor als Ganzes im Azimut verschwenkt. Aufgrund der Abmessungen und Massenträgheit des Sensors sind dann jedoch nur relativ kleine Öffnungswinkel des Überwachungsraumes und/oder kleine Abtastfrequenzen und damit niedrige Frameraten möglich. Wenn eine Winkelauflösung auch in Elevation erforderlich ist, wird zumeist mit Mehrstrahlsystemen gearbeitet, bei denen mehrere Taststrahlen unter unterschiedlichen Elevationswinkeln abgestrahlt werden.

Aus der DE 10 2011 007 243 A1 ist ein optisches System für die Umfelderfassung mit einem Laser für die Erzeugung eines für die Abtastung des Umfeldes vorgesehenen Lichtstrahls bekannt. In dem Strahlengang des von dem Laser erzeugten Lichtstrahls ist ein steuerbares Phasengitter angeordnet.

Aus der EP 2 110 699 A2 ist eine Vorrichtung zum Beleuchten einer Objektszene mit einer Strahlungsquelle und einer Schwenkeinheit zum Schwenken eines von der Strahlungsquelle in die Objektszene gerichteten Strahls bekannt. Um die Objektszene relativ stabil gegenüber Beschleunigungen und Erschütterungen mit einer hohen Abbildungsgüte und hohem Kontrast durch geringe Streustrahlung abbilden zu können, wird vorgeschlagen, dass die Vorrichtung eine Anzahl von mikrooptischen Rastern der Schwenkeinheit zum Schwenken des Strahls und eine Optik zur Veränderung der Strahldivergenz des in die Objektszene gerichteten Strahls umfasst.

### Offenbarung der Erfindung

Aufgabe der Erfindung ist es, einen Lidarsensor zu schaffen, der bei der gebotenen Augensicherheit und geringer Empfindlichkeit gegenüber Streupartikeln eine hohe Abtastfrequenz und/oder große Öffnungswinkel des Überwachungsraumes ermöglicht.

Diese Aufgabe wird erfindungsgemäß dadurch gelöst, dass die Lichtquelle und der Ablenkspiegel dazu eingerichtet sind, mit dem abgelenkten Lichtstrahl ein Feld mikro-optischer Elemente abzutasten, deren jedes, wenn es von dem Lichtstrahl getroffen wird, diesen Lichtstrahl zu einem divergenten Strahl aufweitet, und dass in Abstand zu dem Feld mikro-optischer Elemente ein Licht bündelndes Element angeordnet ist, das den divergenten Strahl in einen den Taststrahl bildenden Strahl umformt, dessen Strahldurchmesser größer ist als der des abgelenkten Strahls.

Die mikro-optischen Elemente und das Licht bündelnde Element bewirken zusammen eine Strahlaufweitung ähnlich wie bei einem Makroscanner, so dass die Augensicherheit auch bei erhöhter Gesamtleistung des Laserstrahls gewährleistet werden kann, da der Strahldurchmesser größer ist als der Pupillendurchmesser des menschlichen Auges. Auch die Empfindlichkeit gegenüber Streupartikeln ist ähnlich gering wie bei Makroscannern. Da jedoch der auf den Ablenkspiegel auftreffende Strahl einen wesentlich kleineren Durchmesser hat, kann ein kleinbauender Ablenkspiegel verwendet werden, mit dem entsprechend hohe Abtastfrequenzen möglich sind. Der am Ablenkspiegel abgelenkte Strahl tastet nicht unmittelbar den Überwachungsraum ab, sondern nur das Feld mikro-optischer Elemente. Die Richtung, in die dann der Taststrahl abgestrahlt wird, ist von der Lage des jeweils getroffenen mikro-optischen Elements relativ zur optischen Achse des Licht bündelnden Elements abhängig. Der Öffnungswinkel des Überwachungsraumes kann deshalb deutlich größer sein als der Winkel, um den der Lichtstrahl am Ablenkspiegel maximal abgelenkt wird. Auf diese Weise wird eine Abtastung eines Überwachungsraumes mit weitem Öffnungswinkel mit hoher Framerate ermöglicht.

Vorteilhafte Ausgestaltungen und Weiterbildungen der Erfindung sind in den Unteransprüchen angegeben.

Die mikro-optischen Elemente können wahlweise Licht brechende Elemente (z. B. Zerstreuungslinsen) oder reflektierende Elemente (z. B. Wölbspiegel oder Hohlspiegel) sein. Auch beugende Elemente (z.B. DOEs, Diffractive Optische Elemente) können verwendet werden.

Das Licht bündelnde Element kann eine optische Linse sein, in deren Fokalebene das Feld mikro-optischer Elemente liegt, so dass die divergenten Strahlen durch die Linse in nahezu parallele Strahlen umgeformt werden. Alternativ wäre anstelle einer Linse auch ein Hohlspiegel denkbar.

Das Licht bündelnde Element kann zugleich das Objektiv des optischen Empfängers bilden, so dass der eintreffende, am Objekt reflektierte Strahl mit dem emittierten Strahl koaxial ist und somit bei der Auswertung des detektierten Signals keine Parallaxenfehler berücksichtigt zu werden brauchen. Beispielsweise kann im Strahlengang zwischen der Lichtquelle und dem Licht bündelnden Element, also zwischen der Lichtquelle und dem Ablenkspiegel, zwischen dem Ablenkspiegel und dem Feld mikro-optischer Elemente oder zwischen dem Feld mikro-optischer Elemente und dem Licht bündelnden Element, ein Strahlteiler vorgesehen sein, der das empfangene Licht auf ein Detektorfeld umlenkt. In einer Ausführungsform kann auch das Feld mikro-optischer Elemente zugleich die Funktion eines Strahlteilers haben.

Zum Ausgleich von Abbildungsfehlern kann es vorteilhaft sein, wenn das Feld mikro-optischer Elemente oder ein Spiegel, der das Licht auf dieses Feld umlenkt, gewölbt ausgebildet ist.

Im folgenden werden Ausführungsbeispiele der Erfindung anhand der Zeichnungen näher erläutert.

Es zeigen:
- Fig. 1: eine Skizze eines erfindungsgemäßen Lidarsensors;
- Fig. 2: eine Illustration eines Anwendungsbeispiels, bei dem der Lidarsensor zur Objektortung in einem Kraftfahrzeug eingesetzt wird; und
- Fig. 3 bis 8: Skizzen von Lidarsensoren gemäß weiteren Ausführungsformen der Erfindung.

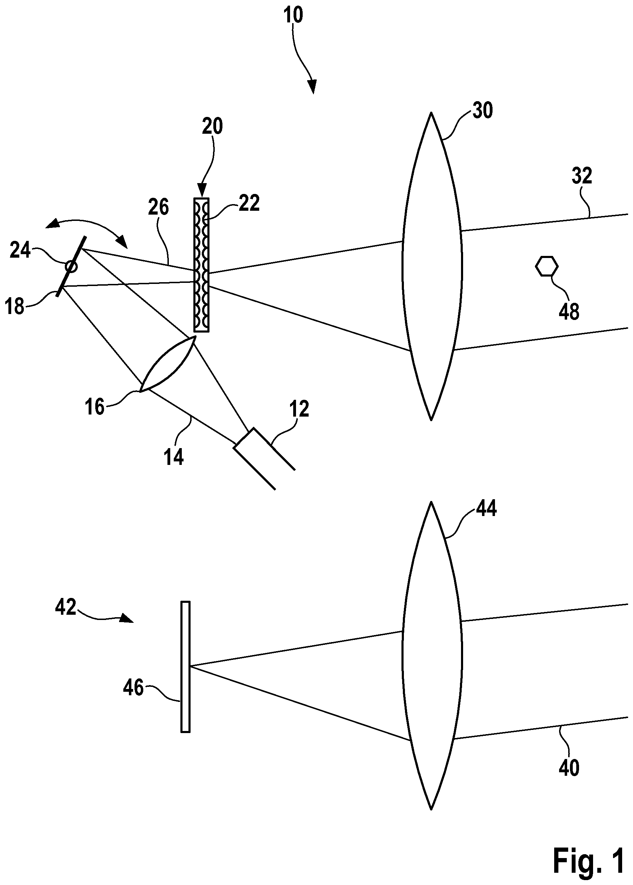

Der in Fig. 1 gezeigte Lidarsensor 10 weist als Lichtquelle 12 einen Halbleiterlaser auf, der einen Lichtstrahl 14 im sichtbaren Bereich des Spektrums oder wahlweise auch im Infrarotbereich emittiert. Eine Abbildungslinse 16 fokussiert das Licht über einen Ablenkspiegel 18 auf ein Feld 20 mikro-optischer Elemente 22. Im gezeigten Beispiel ist das Feld 20 eine transparente Platte, beispielsweise eine Glasplatte, die ein feines Raster von Zerstreuungslinsen als mikro-optische Elemente 22 aufweist.

Der Ablenkspiegel 18 ist um eine senkrecht zur Zeichenebene in Fig. 1 verlaufende Achse 24 schwenkbar und wird oszillierend bewegt, wie in Fig. 1 durch einen Doppelpfeil angedeutet wird. Der Lichtstrahl 14 wird am Ablenkspiegel 18 so abgelenkt, dass er einen abgelenkten Strahl 26 bildet, der das Feld 20 abtastet. Diejenige der Zerstreuungslinsen, die von dem abgelenkten Strahl 26 getroffen wird, erzeugt einen divergenten Strahl 28, der auf ein Licht bündelndes Element in Form einer Linse 30 trifft.

Der Abstand zwischen dem Feld 20 und der Linse 30 entspricht etwa der Brennweite der Linse 30, so dass der divergente Strahl 28 durch die Linse in ein annähernd paralleles Strahlenbündel umgeformt wird, das als Taststrahl 32 vom Lidarsensor 10 ausgestrahlt wird. Die Abstrahlrichtung des Taststrahls 32 ist dabei von dem Ort des mikro-optischen Elements 22 abhängig, das gerade von dem abgelenkten Strahl 26 getroffen wird. Auf diese Weise bewirkt der Ablenkspiegel 18 mittelbar auch eine Ablenkung des Taststrahls 32.

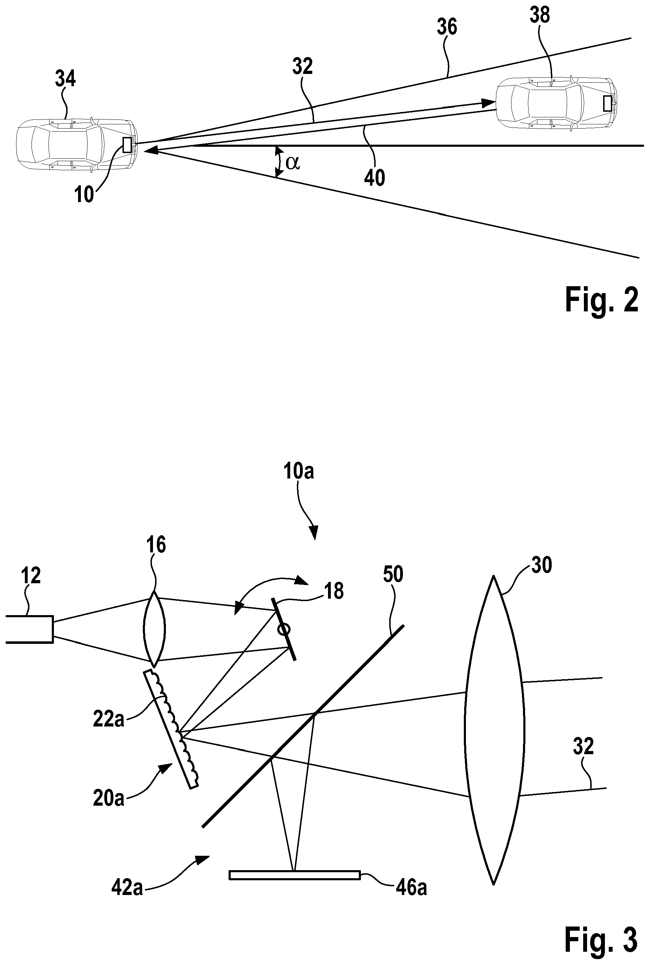

Fig. 2 zeigt ein Kraftfahrzeug 34, bei dem der Lidarsensor 10 in der Frontpartie eingebaut und in Fahrtrichtung nach vorn gerichtet ist. Der Taststrahl 32 wird mit Hilfe des Ablenkspiegels oszillierend abgelenkt und überstreicht einen Winkelbereich ±α, der im gezeigten Beispiel ±12° beträgt und einen von dem Lidarsensor 10 abgetasteten Überwachungsraum 36 definiert. Im gezeigten Beispiel befindet sich im Überwachungsraum 36 ein Objekt 38, nämlich ein vorausfahrendes Fahrzeug, das von dem Taststrahl 32 getroffen wird und einen Teil der Strahlung reflektiert, so dass ein reflektierter Strahl 40 zum Lidarsensor 10 zurückläuft und dort empfangen wird.

In dem in Fig. 1 gezeigten Beispiel wird ein Empfänger 42 des Lidarsensors durch eine Linse 44 und einen opto-elektronischen Bildsensor 46 gebildet. Der reflektierte Strahl 40 wird durch die Linse 44, die neben der Linse 30 angeordnet ist, auf den Bildsensor 46 fokussiert. Der Bildsensor wird beispielsweise durch eine Zeile oder ein Feld von CCD-Elementen gebildet.

Bei der in Fig. 1 gezeigten Anordnung bestimmt der Abstand zwischen dem Ablenkspiegel 18 und dem Feld 20 den Winkel, um den der Ablenkspiegel gedreht werden muss, um das Feld 20 vollständig abzutasten. Je größer dieser Abstand ist, desto kleiner ist der Winkelbereich, in dem der Ablenkspiegel 18 verschwenkt werden muss. Der Winkelbereich, der von dem Abtaststrahl 32 überstrichen wird und somit den Überwachungsraum 36 definiert, ist dagegen von der Brennweite der Linse 30 und damit vom Abstand zwischen dem Feld 20 und der Linse 30 abhängig und kann deshalb deutlich mehr als das Zweifache des Winkelbereichs betragen, in dem der Ablenkspiegel 18 verschwenkt wird.

Im Fall eines eindimensionalen Lidarsensors wird der Taststrahl 32 nur in einer Dimension verschwenkt, beispielsweise im Azimut, wie in Fig. 2. In dem Fall besteht das Feld 20 nur einer einzigen Zeile von dicht nebeneinander angeordneten mikro-optischen Elementen 22.

Im Fall eines zweidimensionalen Lidarsensors, bei dem der Taststrahl 32 auch in Elevation verschwenkt wird, ist das Feld 20 hingegen ein zweidimensionales Feld, das auch in der Richtung senkrecht zur Zeichenebene in Fig. 1 ausgedehnt ist, und der Ablenkspiegel 18 ist nicht nur um die Achse 24 schwenkbar, sondern auch um eine Achse, die rechtwinklig zur Achse 24 in Längsrichtung des Spiegels verläuft.

In einem praktischen Beispiel hat der von der Lichtquelle 12 erzeugte Lichtstrahl 14 eine Beugungsmesszahl M² von etwa 3,3, einen Öffnungswinkel von etwa 1,7° und an der dünnsten Stelle einen Durchmesser von etwa 0,14 mm. Die Abbildungslinse 16 hat einen Durchmesser von 3 mm und eine Brennweite von 29 mm, der Abstand zur Lichtquelle beträgt 76 mm. Der Ablenkspiegel 18 ist etwa 11 mm von der Abbildungslinse 16 und etwa 40 mm vom Feld 20 der mikro-optischen Elemente entfernt. Das Feld 20 hat in der Hauptabtastrichtung (vertikal in Fig. 1) eine Länge von 22 mm und bildet zehn Mikrolinsen pro Millimeter. Die Linse 30 hat einen Durchmesser von 50 mm und eine Brennweite von 50 mm. Der Taststrahl 32 kann dann in dem genannten Winkelbereich von +/- 12° verschwenkt werden und hat einen Durchmesser, der am Ort der Linse etwa 19 mm beträgt und über eine Entfernung von 180 m auf etwa 57 cm zunimmt. Der Durchmesser des Taststrahls 32 ist somit selbst unmittelbar am Lidarsensor mehr als doppelt so groß wie die Eintrittspupille eines menschlichen Auges (ca. 7 mm), so dass die nötige Augensicherheit auch bei hoher Gesamtleistung der Laserstrahlung und entsprechend großer Reichweite und Empfindlichkeit des Lidarsensors gewahrt werden kann. Außerdem ist der Strahldurchmesser größer als der typische Durchmesser von Streupartikeln wie Schneeflocken 48, Regentropfen, Staubkörnchen und dergleichen, so dass nur entsprechend geringe Streu- und Absorptionsverluste auftreten.

Fig. 3 zeigt als weiteres Ausführungsbeispiel einen Lidarsensor 10a, mit einem Feld 20a mikro-optischer Elemente 22a, das durch eine reflektierende Platte gebildet wird. Die einzelnen mikro-optischen Elemente 22a werden in diesem Fall durch kleine Wölbspiegel (oder wahlweise auch Hohlspiegel mit sehr kurzer Brennweite) gebildet.

Die Linse 30 bildet in diesem Ausführungsbeispiel zugleich das Objektiv eines Empfängers 42a, der außerdem einen Strahlteiler 50 aufweist, beispielsweise einen halbdurchlässigen Spiegel, der den divergenten Strahl von den mikrooptischen Elementen 22a zur Linse 30 durchlässt, jedoch einen Teil des empfangenen Lichts auf einen Bildsensor 46a ablenkt. Diese Ausbildung des Empfängers 42a ist selbstverständlich auch bei Ausführungsformen mit Licht brechenden Elementen als mikro-optischen Elementen möglich, wie umgekehrt auch in Kombination mit den reflektierenden mikro-optischen Elementen 22a ein separat von der Linse 30 angeordneter Empfänger möglich ist.

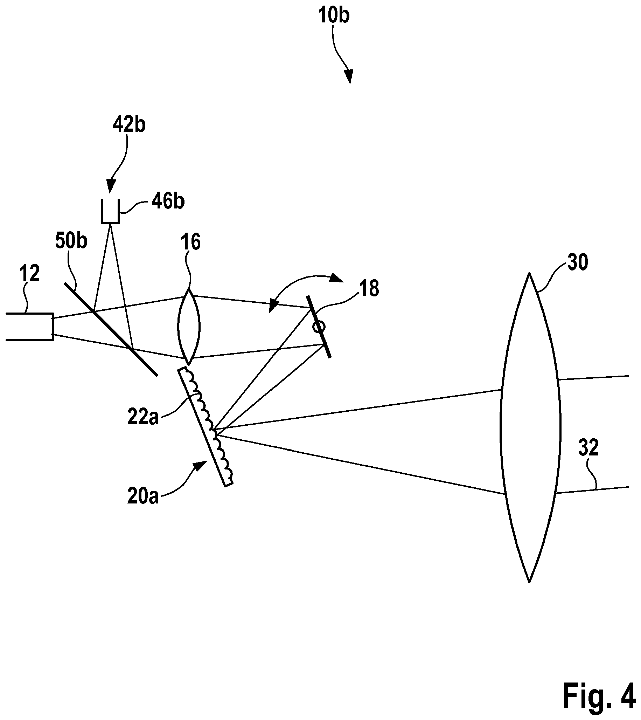

Fig. 4 zeigt einen Lidarsensor 10b, der sich von dem Lidarsensor 10a dadurch unterscheidet, dass ein anders aufgebauter Empfänger 42b vorgesehen ist. Dieser Empfänger weist einen Strahlteiler 50b in der Form eines halbdurchlässigen Spiegels auf, der zwischen der Lichtquelle 12 und der Abbildungslinse 16 angeordnet ist und das empfangene Licht auf einen Bildsensor 46b umlenkt, der durch ein einzelnes lichtempfindliches Element gebildet wird. Bei dieser Ausführungsform wird somit das empfangene Licht von der Linse 30 auf das Feld 20a fokussiert, dort auf den Ablenkspiegel 18 reflektiert und schließlich durch die Abbildungslinse 16 und über den Strahlteiler 50b auf den Bildsensor 46b fokussiert. Die Richtung, aus der das empfangene Licht eintrifft, ergibt sich in diesem Fall aus der zu jedem Zeitpunkt bekannten Winkelstellung des Ablenkspiegels 18, wobei angenommen wird, dass die Signallaufzeit des Lichts so kurz ist, dass der Drehwinkel, um den der Ablenkspiegel 18 innerhalb dieser Zeit verdreht wird, vernachlässigbar klein ist.

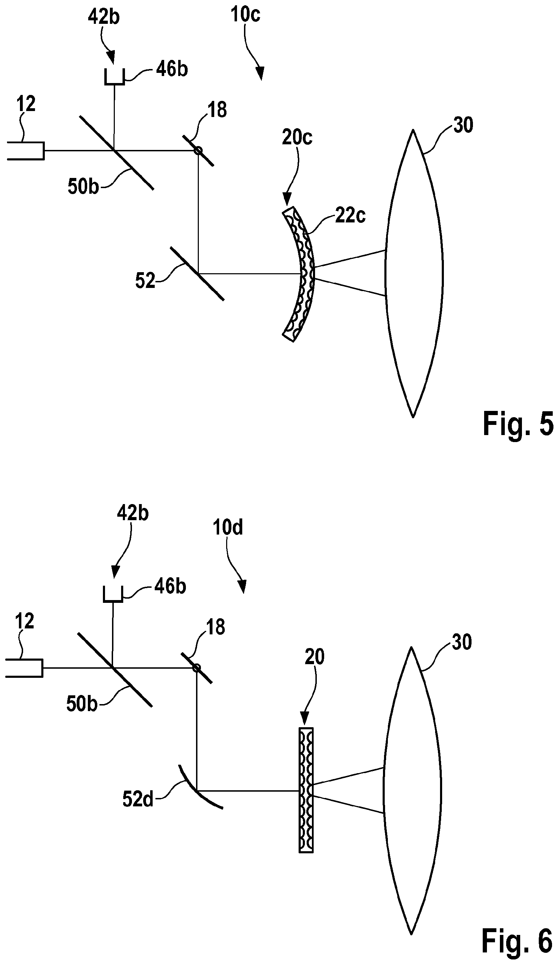

Fig. 5 zeigt einen Lidarsensor 10c, der sich von dem Lidarsensor nach Fig. 4 dadurch unterscheidet, dass als Feld mikro-optischer Elemente ein gewölbtes Feld 20c vorgesehen ist. Die Wölbung dieses Feldes erlaubt es, Abbildungsfehler zu minimieren. Als mikro-optische Elemente sind in diesem Beispiel Licht beugende Elemente 22c vorgesehen. Wahlweise könnten jedoch auch Licht brechende oder reflektierende Elemente vorgesehen sein.

Zwischen dem Ablenkspiegel 18 und dem Feld 20c ist in diesem Beispiel ein weiterer Spiegel 52 vorgesehen, der das Licht so umlenkt, dass es längs der optischen Achse der Linse 30 auf das Feld 20c fällt.

Fig. 6 zeigt als modifiziertes Ausführungsbeispiel einen Lidarsensor 10d, der den gleichen grundsätzlichen Aufbau wie der Lidarsensor 10c in Fig. 5 aufweist, mit dem Unterschied, dass das gewölbte Feld 20c gemäß Fig. 5 durch das nicht gewölbte Feld 20 mikro-optischer Elemente gemäß Fig. 1 ersetzt ist. Dafür ist hier zum Ausgleich von Abbildungsfehlern anstelle des ebenen Spiegels 52 ein gewölbter Spiegel 52d vorgesehen.

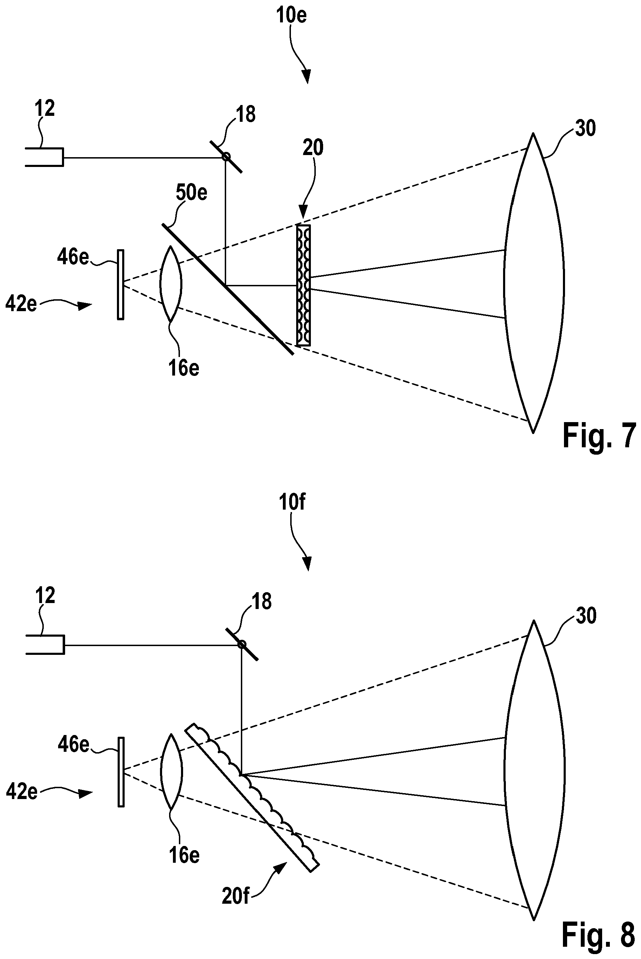

Fig. 7 zeigt einen Lidarsensor 10e, bei dem die Lichtquelle 12 einen scharf gebündelten parallelen Laserstrahl erzeugt, der über den Ablenkspiegel 18 und einen halbdurchlässigen Spiegel eines Strahlteilers 50e auf das Feld 20 mikrooptischer Elemente gelenkt wird. Das empfangene und von der Linse 30 gebündelte Licht (hier durch gestrichelte Linien dargestellt) fällt durch das (lichtdurchlässige) Feld 20 hindurch auf den Strahlteiler 50e und wird durch diesen auf einen Empfänger 42e ausgekoppelt, der durch einen flächigen (oder zeilenförmigen) Bildsensor 46e und eine Abbildungslinse 16e gebildet wird. Die zusätzliche Abbildungslinse 16e ermöglicht die Verwendung eines sehr kleinen Bildsensors 46e. Außerdem kann bei dieser Anordnung die Empfangsapertur besser ausgenutzt werden. Der Bildsensor 46 empfängt das gesamte Licht eines Strahlenbündels, das an der Linse 30 den vollen Querschnitt dieser Linse ausfüllt. Auf diese Weise wird eine höhere Signalstärke im Empfangspfad erreicht.

Fig. 8 zeigt schließlich einen Lidarsensor 10f, der sich von dem Lidarsensor 10e dadurch unterscheidet, dass ein Feld 20f reflektierender mikro-optischer Elemente vorgesehen ist, das jedoch halbdurchlässig ist und somit zugleich als Strahlteiler fungiert.

## Patentansprüche

1. Lidarsensor, insbesondere für Kraftfahrzeuge, mit einer Lichtquelle (12), einem beweglichen Ablenkspiegel (18) zum Erzeugen eines einen Überwachungsraum (36) überstreichenden Taststrahls (32) durch Ablenken eines von der Lichtquelle (12) emittierten Lichtstrahls (14), und mit einem optischen Empfänger (42; 42a; 42b; 42e) zum Detektieren von Licht, das an einem von dem Taststrahl (32) getroffenen Objekt (38) im Überwachungsraum (36) reflektiert wurde, wobei die Lichtquelle (12) und der Ablenkspiegel (18) dazu eingerichtet sind, mit dem abgelenkten Lichtstrahl (26) ein Feld (20; 20a, 20c; 20f) mikro-optischer Elemente (22; 22a; 22c) abzutasten, deren jedes, wenn es von dem Lichtstrahl getroffen wird, diesen Lichtstrahl zu einem divergenten Strahl (28) aufweitet, und wobei in Abstand zu dem Feld (20; 20a, 20c; 20f) mikro-optischer Elemente ein Licht bündelndes Element (30) angeordnet ist, das den divergenten Strahl (28) in einen den Taststrahl (32) bildenden Strahl umformt, dessen Strahldurchmesser größer ist als der des abgelenkten Strahls (26).

2. Lidarsensor nach Anspruch 1, bei dem die mikro-optischen Elemente (22) Mikrolinsen sind.

3. Lidarsensor nach Anspruch 1, bei dem die mikro-optischen Elemente (22a) reflektierende Elemente sind.

4. Lidarsensor nach Anspruch 1, bei dem die mikro-optischen Elemente (22c) Licht beugende Elemente sind.

5. Lidarsensor nach einem der vorstehenden Ansprüche, mit einer Abbildungslinse (16), die den von der Lichtquelle (12) emittierten Lichtstrahl (14) über den Ablenkspiegel (18) auf das Feld (20; 20a) der mikro-optischen Elemente fokussiert.

6. Lidarsensor nach einem der vorstehenden Ansprüche, bei dem der emittierte Lichtstrahl (14) und der abgelenkte Lichtstrahl (26) einen Durchmesser von maximal 5 mm haben und das Licht bündelnde Element (30) einen Durchmesser von mindestens 15 mm hat.

7. Lidarsensor nach einem der vorstehenden Ansprüche, bei dem das Licht bündelnde Element (30) zugleich ein Objektiv des Empfängers (42a; 42b; 42e) bildet.

8. Lidarsensor nach Anspruch 7, mit einem Strahlteiler (50; 50b; 50e) im Strahlengang zwischen der Lichtquelle (12) und dem Licht bündelnden Element (30), zum Ablenken des empfangenen Lichts auf einen Bildsensor (46a; 46b; 46e) des Empfängers.

9. Lidarsensor nach Anspruch 8, bei dem der Strahlteiler (50) zwischen dem Feld (20a) mikro-optischer Elemente und dem Licht bündelnden Element (30) angeordnet ist.

10. Lidarsensor nach Anspruch 8, bei dem der Strahlteiler (50b) zwischen der Lichtquelle (12) und dem Ablenkspiegel (18) angeordnet ist.

11. Lidarsensor nach Anspruch 8, bei dem der Strahlteiler (50e) zwischen dem Ablenkspiegel (18) und dem Feld (20) mikro-optischer Elemente angeordnet ist.

12. Lidarsensor nach einem der vorstehenden Ansprüche, bei dem der Empfänger (42b; 42e) eine Linse (16; 16e) zum Fokussieren des empfangenen, von dem Licht bündelnden Element (30) vorfokussierten Lichts auf einen Bildsensor (46b; 46e) aufweist.

13. Lidarsensor nach Anspruch 12, bei dem die Linse (16e) des Empfängers (46e) und das Licht bündelnde Element (30) eine gemeinsame optische Achse haben und ein Strahlteiler (50e) so auf der gemeinsamen optischen Achse angeordnet ist, dass er das vom Ablenkspiegel (18) kommende Licht zu dem Licht bündelnden Element (30) umlenkt und das empfangene Licht in den Empfänger (42) auskoppelt.

14. Lidarsensor nach Anspruch 13, bei dem der Strahlteiler durch das Feld (20f) mikro-optischer Elemente gebildet wird.

15. Lidarsensor nach einem der vorstehenden Ansprüche, bei dem das Feld (20c) mikro-optischer Elemente gewölbt ist.

16. Lidarsensor nach einem der vorstehenden Ansprüche, bei dem auf der optischen Achse des Licht bündelnden Elements (30) ein Spiegel (52; 52d) angeordnet ist, der den vom Ablenkspiegel (18) abgelenkten Strahl auf das Feld (20; 20c) mikro-optischer Elemente umlenkt.

17. Lidarsensor nach Anspruch 16, bei dem der Spiegel (52d) gewölbt ist.

## Claims

1. Lidar sensor, in particular for motor vehicles, having a light source (12), a movable deflection mirror (18) for producing a scanning beam (32) that scans a monitoring space (36) by deflecting a light beam (14) emitted by the light source (12), and having an optical receiver (42; 42a; 42b; 42e) for detecting light that was reflected at an object (38), on which the scanning beam (32) impinged, in the monitoring space (36), wherein the light source (12) and the deflection mirror (18) are set up to scan a field (20; 20a, 20c; 20f) of micro-optical elements (22; 22a; 22c) using the deflected light beam (26), with each of said micro-optical elements on which the light beam impinges expanding said light beam to form a divergent beam (28), and wherein, at a distance from the field (20; 20a, 20c; 20f) of micro-optical elements, a light-bundling element (30) is arranged that reshapes the divergent beam (28) into a beam forming the scanning beam (32) having a beam diameter that is greater than that of the deflected beam (26).

2. Lidar sensor according to Claim 1, in which the micro-optical elements (22) are micro-lenses.

3. Lidar sensor according to Claim 1, in which the micro-optical elements (22a) are reflective elements.

4. Lidar sensor according to Claim 1, in which the micro-optical elements (22c) are light-diffracting elements.

5. Lidar sensor according to one of the preceding claims, having an imaging lens (16) that focuses the light beam (14), emitted by the light source (12), onto the field (20; 20a) of the micro-optical elements by way of the deflection mirror (18).

6. Lidar sensor according to one of the preceding claims, in which the emitted light beam (14) and the deflected light beam (26) have a diameter of at most 5 mm, and the light-bundling element (30) has a diameter of at least 15 mm.

7. Lidar sensor according to one of the preceding claims, in which the light-bundling element (30) at the same time forms an objective of the receiver (42a; 42b; 42e) .

8. Lidar sensor according to Claim 7, having a beam splitter (50; 50b; 50e) in the beam path between the light source (12) and the light-bundling element (30) for deflecting the received light onto an image sensor (46a; 46b; 46e) of the receiver.

9. Lidar sensor according to Claim 8, in which the beam splitter (50) is arranged between the field (20a) of micro-optical elements and the light-bundling element (30) .

10. Lidar sensor according to Claim 8, in which the beam splitter (50b) is arranged between the light source (12) and the deflection mirror (18).

11. Lidar sensor according to Claim 8, in which the beam splitter (50e) is arranged between the deflection mirror (18) and the field (20) of micro-optical elements.

12. Lidar sensor according to one of the preceding claims, in which the receiver (42b; 42e) has a lens (16; 16e) for focusing the received light that has been pre-focused by the light-bundling element (30) onto an image sensor (46b; 46e).

13. Lidar sensor according to Claim 12, in which the lens (16e) of the receiver (46e) and the light-bundling element (30) have a common optical axis, and a beam splitter (50e) is arranged on the common optical axis such that it deflects the light coming from the deflection mirror (18) to the light-bundling element (30) and couples the received light out into the receiver (42) .

14. Lidar sensor according to Claim 13, in which the beam splitter is formed by the field (20f) of micro-optical elements.

15. Lidar sensor according to one of the preceding claims, in which the field (20c) of micro-optical elements is curved.

16. Lidar sensor according to one of the preceding claims, in which a mirror (52; 52d) that deflects the beam deflected by the deflection mirror (18) onto the field (20; 20c) of micro-optical elements is arranged on the optical axis of the light-bundling element (30).

17. Lidar sensor according to Claim 16, in which the mirror (52d) is curved.

## Revendications

1. Capteur lidar, en particulier pour des véhicules automobiles, avec une source de lumière (12), un miroir de déviation mobile (18) pour produire un faisceau de scrutation (32) balayant un espace à surveiller (36) par déviation d'un faisceau lumineux (14) émis par la source de lumière (12) et avec un récepteur optique (42; 42a; 42b; 42e) pour détecter la lumière qui a été réfléchie sur un objet (38) atteint par le faisceau de scrutation (32) dans l'espace à surveiller (36), dans lequel la source de lumière (12) et le miroir de déviation (18) sont conçus pour scruter avec le faisceau lumineux dévié (26) un champ (20; 20a, 20c; 20f) d'éléments micro-optiques (22; 22a; 22c), dont chacun, lorsqu'il est atteint par le faisceau lumineux, élargit ce faisceau en un faisceau divergent (28), et dans lequel un élément concentrant la lumière (30) est disposé à distance du champ (20; 20a, 20c; 20f) d'éléments micro-optiques, qui transforme le faisceau divergent (28) en un faisceau formant le faisceau de scrutation (32), dont le diamètre de faisceau est plus grand que celui du faisceau dévié (26) .

2. Capteur lidar selon la revendication 1, dans lequel les éléments micro-optiques (22) sont des microlentilles.

3. Capteur lidar selon la revendication 1, dans lequel les éléments micro-optiques (22a) sont des éléments réfléchissants.

4. Capteur lidar selon la revendication 1, dans lequel les éléments micro-optiques (22c) sont des éléments courbant la lumière.

5. Capteur lidar selon l'une quelconque des revendications précédentes, avec une lentille d'imagerie (16), qui focalise le faisceau lumineux (14) émis par la source de lumière (12) par l'intermédiaire du miroir de déviation (18) sur le champ (20; 20a) des éléments micro-optiques.

6. Capteur lidar selon l'une quelconque des revendications précédentes, dans lequel le faisceau lumineux émis (14) et le faisceau lumineux dévié (26) ont un diamètre de 5 mm au maximum et l'élément concentrant la lumière (30) a un diamètre d'au moins 15 mm.

7. Capteur lidar selon l'une quelconque des revendications précédentes, dans lequel l'élément concentrant la lumière (30) forme en même temps un objectif du récepteur (42a; 42b; 42e).

8. Capteur lidar selon la revendication 7, avec un diviseur de faisceau (50; 50b; 50e) dans le trajet du faisceau entre la source de lumière (12) et l'élément concentrant la lumière (30), pour dévier la lumière reçue sur un capteur d'image (46a; 46b; 46e) du récepteur.

9. Capteur lidar selon la revendication 8, dans lequel le diviseur de faisceau (50) est disposé entre le champ (20a) d'éléments micro-optiques et l'élément concentrant la lumière (30).

10. Capteur lidar selon la revendication 8, dans lequel le diviseur de faisceau (50b) est disposé entre la source de lumière (12) et le miroir de déviation (18).

11. Capteur lidar selon la revendication 8, dans lequel le diviseur de faisceau (50e) est disposé entre le miroir de déviation (18) et le champ (20) d'éléments micro-optiques.

12. Capteur lidar selon l'une quelconque des revendications précédentes, dans lequel le récepteur (42b; 42e) présente une lentille (16; 16e) pour focaliser sur un capteur d'image (46; 46e) la lumière reçue préfocalisée par l'élément concentrant la lumière (30).

13. Capteur lidar selon la revendication 12, dans lequel la lentille (16e) du récepteur (46e) et l'élément concentrant la lumière (30) ont un axe optique commun et un diviseur de faisceau (50e) est disposé sur l'axe optique commun, de telle manière qu'il dévie la lumière venant du miroir de déviation (18) vers l'élément concentrant la lumière (30) et déconnecte la lumière reçue dans le récepteur (42).

14. Capteur lidar selon la revendication 13, dans lequel le diviseur de faisceau est formé par le champ (20f) d'éléments micro-optiques.

15. Capteur lidar selon l'une quelconque des revendications précédentes, dans lequel le champ (20c) d'éléments micro-optiques est incurvé.

16. Capteur lidar selon l'une quelconque des revendications précédentes, dans lequel un miroir (52; 52d), qui dévie le faisceau dévié par le miroir de déviation (18) sur le champ (20; 20c) d'éléments micro-optiques, est disposé sur l'axe optique de l'élément concentrant la lumière (30).

17. Capteur lidar selon la revendication 16, dans lequel le miroir (52d) est incurvé.
